(19) **Europäisches Patentamt / European Patent Office / Office européen des brevets**

(11) **EP 1 937 553 B1**

(12) **FASCICULE DE BREVET EUROPEEN**

(45) Date de publication et mention
de la délivrance du brevet:
**05.05.2010 Bulletin 2010/18**

(21) Numéro de dépôt: **06808118.1**

(22) Date de dépôt: **13.09.2006**

(51) Int Cl.:
***B64C 23/06*** *(2006.01)*     ***B64C 7/02*** *(2006.01)*

(86) Numéro de dépôt international:
**PCT/FR2006/002092**

(87) Numéro de publication internationale:
**WO 2007/036621 (05.04.2007 Gazette 2007/14)**

(54) **DISPOSITIF DE CONTROLE D'UN SILLAGE TOURBILLONNAIRE ENGENDRE PAR UN ELEMENT OBLONG SUR L'EXTRADOS D'UNE SURFACE PORTANTE D'UN AERONEF**

VORRICHTUNG ZUR STEUERUNG VON DURCH DAS LÄNGLICHE ELEMENT EINER FLUGZEUGTRAGFLÄCHE ERZEUGTEN NACHZUGSWIRBELN

DEVICE FOR CONTROLLING A VORTEX TRAIL GENERATED BY THE OBLONG ELEMENT OF AN AIRCRAFT BEARING SURFACE

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **30.09.2005 FR 0509983**

(43) Date de publication de la demande:
**02.07.2008 Bulletin 2008/27**

(73) Titulaire: **AIRBUS OPERATIONS (SAS)**
**31060 Toulouse (FR)**

(72) Inventeur: **ATINAULT, Olivier**
**F-31400 Toulouse (FR)**

(74) Mandataire: **Hauer, Bernard**
**Bloch & Bonnétat**
**23bis, rue de Turin**
**75008 Paris (FR)**

(56) Documents cités:
**US-A- 3 744 745     US-A- 4 643 376**
**US-A- 4 685 643     US-A1- 2004 046 086**

## Description

La présente invention concerne un dispositif de contrôle d'au moins un sillage tourbillonnaire engendré sur l'extrados d'une surface portante d'un aéronef, ledit sillage tourbillonnaire étant engendré par au moins un élément oblong qui est monté sous cette surface portante.

Plus particulièrement, bien que non exclusivement, la présente invention s'applique au contrôle d'écoulements fluides à l'extrados des ailes d'un avion, qui sont munies d'éléments oblongs tels que des réacteurs, des bidons de ravitaillement en vol, ou des charges, par exemple des missiles. Il s'agit plus précisément de contrôler le sillage tourbillonnaire pour une position de l'avion proche du décrochage, afin d'améliorer la portance maximale que la voilure de l'avion peut produire en présence d'un ou plusieurs éléments oblongs tels que précités.

Par les documents US-3 744 745 et US-4 685 643, on connaît des dispositifs de contrôle de sillage qui sont destinés à agir sur le sillage tourbillonnaire engendré sur une aile d'avion par une nacelle de réacteur qui est montée sous cette aile. Ces dispositifs de contrôle usuels comportent au moins un moyen de contrôle qui est agencé directement sur la nacelle sur un côté de celle-ci. Ce moyen de contrôle est éloigné du bord d'attaque de l'aile correspondante et est situé en amont de ce bord d'attaque. De plus, ce moyen de contrôle usuel présente une forme allongée, dont l'axe longitudinal est sensiblement parallèle à un écoulement fluide local et dont l'extrémité en amont peut être pointue.

Un tel moyen de contrôle usuel engendre un tourbillon auxiliaire destiné au contrôle du sillage tourbillonnaire. Ce tourbillon auxiliaire doit donc se déplacer jusqu'à l'aile s'il veut pouvoir agir sur ledit sillage tourbillonnaire à contrôler. Or, comme la distance entre ce moyen de contrôle et ledit sillage tourbillonnaire est relativement importante, il est difficile de trouver une position appropriée dudit moyen de contrôle sur la nacelle pour amener le tourbillon auxiliaire exactement au niveau dudit sillage tourbillonnaire. De plus, le trajet de ce tourbillon auxiliaire varie généralement en fonction de la vitesse de l'avion et de son incidence.

Aussi, pour obtenir un tourbillon auxiliaire de forte énergie qui est susceptible d'agir sur ledit sillage tourbillonnaire quelle que soit la situation, les moyens de contrôle décrits dans les documents précités présentent une forme en plaque plane, d'épaisseur très faible. On sait qu'un moyen de contrôle qui présente des bords très anguleux (comme cela est le cas pour une telle plaque) engendre un tourbillon auxiliaire puissant, et ceci généralement quelle que soit l'incidence de l'avion. En raison de cette dernière caractéristique, un tel moyen de contrôle usuel présente toutefois l'inconvénient d'engendrer également un tourbillon auxiliaire à de faibles incidences de l'avion et notamment en vol en phase de croisière, ce qui entraîne en particulier une augmentation gênante de la traînée dans cette phase de vol.

Par conséquent, un dispositif de contrôle usuel du type précité n'est pas complètement satisfaisant.

La présente invention concerne un dispositif de contrôle sur l'extrados d'une surface portante d'un aéronef d'au moins un sillage tourbillonnaire engendré par au moins un élément oblong qui est monté sous cette surface portante en dépassant en amont partiellement le bord d'attaque de ladite surface portante (notamment une aile d'avion), dispositif qui permet de remédier aux inconvénients précités.

A cet effet, selon l'invention, ledit dispositif du type comportant au moins un moyen de contrôle :

- qui est agencé au niveau dudit élément oblong ; et
- qui présente une forme allongée, dont l'axe longitudinal est sensiblement parallèle à un écoulement fluide local et dont l'extrémité amont (par rapport audit écoulement fluide local) est pointue,

est remarquable en ce que ledit moyen de contrôle :

- est réalisé (entièrement) sous forme d'une pointe qui est triangulaire à la fois en vue latérale et en vue de dessus ;
- est agencé à la fois sur un élément de fixation (précisé ci-dessous) de l'élément oblong et sur la surface portante de sorte que la base de ladite pointe (correspondant à son extrémité aval) est amenée au contact du bord d'attaque de ladite surface portante ; et
- présente une forme qui est sensiblement triangulaire dans un plan perpendiculaire audit axe longitudinal et qui présente un premier côté destiné à venir au contact dudit élément de fixation et deux côtés adjacents formant des flancs, lesdits flancs étant reliés ensemble par un bord arrondi.

Ainsi, grâce à l'invention :

- comme la base du moyen de contrôle est amenée au contact du bord d'attaque de la surface portante, le tourbillon auxiliaire engendré par le moyen de contrôle passe naturellement directement sur l'extrados de la surface portante, là où se trouve le sillage tourbillonnaire à contrôler ;
- comme ledit moyen de contrôle présente une forme triangulaire comprenant deux flancs adjacents, l'écoulement local au niveau de l'élément oblong attaque le moyen de contrôle par l'un des flancs à très fortes incidences locales positives, ce qui engendre l'apparition d'un tourbillon auxiliaire d'origine visqueuse (à basse vitesse), précisé ci-dessous ; et
- comme le moyen de contrôle présente un bord arrondi entre les deux flancs, ledit moyen de contrôle peut être contourné par l'écoulement fluide local en vol en phase de croisière, c'est-à-dire pour des incidences locales au niveau du moyen de contrôle qui sont réduites et comprises par exemple entre -5° et +5°, ce qui évite tout décollement dans de telles situations de vol.

Par conséquent, le moyen de contrôle conforme à l'invention engendre un tourbillon auxiliaire d'origine visqueuse, lorsqu'il est placé sous forte incidence par rapport à son axe principal, c'est-à-dire lorsque la voilure de l'aéronef est proche du décrochage. Dans le cadre de la présente invention, on entend par tourbillon visqueux un tourbillon s'enroulant depuis un point singulier de frottement pariétal nul à la paroi, d'axe initial perpendiculaire à la paroi. Ce tourbillon auxiliaire visqueux vient renforcer et stabiliser en envergure le sillage tourbillonnaire émis par l'élément oblong. Cette stabilisation permet de maintenir l'ensemble tourbillonnaire proche de la voilure et parallèlement à l'axe de l'élément oblong. En revanche, ce tourbillon auxiliaire n'est pas engendré, lorsque le moyen de contrôle (qui présente une forme triangulaire avec deux flancs adjacents reliés ensemble par un bord arrondi, et non pas une forme en plaque plane) est placé à des incidences faibles, c'est-à-dire à des incidences qui correspondent à l'attitude d'un vol en phase de croisière d'un avion conventionnel.

Le dispositif de contrôle conforme à l'invention permet donc de remédier aux inconvénients précités. Bien entendu, la position et surtout la forme telles que précitées du moyen de contrôle représentent des caractéristiques essentielles à son efficacité.

Dans un mode de réalisation particulier, ledit moyen de contrôle présente en vue de dessus une forme triangulaire, dont d'une part la longueur L du côté en regard de l'élément de fixation et d'autre part la longueur ℓ du côté en contact avec la surface portante vérifient la relation suivante :

$$L \geq \ell \geq L/10.$$

En outre, dans un mode de réalisation préféré, ledit dispositif de contrôle comporte deux moyens de contrôle qui sont agencés de part et d'autre de l'élément de fixation.

On notera que dans le cadre de la présente invention, ledit élément de fixation peut correspondre :

- soit audit élément oblong (une nacelle de turbopropulseur ou un bidon de ravitaillement en vol par exemple), lorsque ce dernier est fixé directement sous la surface portante ;
- soit à un support (un mât de réacteur ou un support d'emport de charge par exemple) permettant de fixer ledit élément oblong (un réacteur ou une charge par exemple) sous ladite surface portante.

De plus, dans le cadre de la présente invention, ladite surface portante peut correspondre à toute surface de l'aéronef qui participe à la portance de ce dernier, et bien entendu en particulier aux ailes d'un avion formant la voilure de ce dernier.

Les figures du dessin annexé feront bien comprendre comment l'invention peut être réalisée. Sur ces figures, des références identiques désignent des éléments semblables.

La figure 1 montre schématiquement un dispositif de contrôle conforme à l'invention qui est en position de fonctionnement.

La figure 2 illustre schématiquement un moyen de contrôle d'un dispositif de contrôle conforme à l'invention.

Les figures 3A, 3B et 3C illustrent schématiquement différentes coupes transversales le long de l'axe longitudinal du moyen de contrôle représenté sur la figure 2.

La figure 4 est une vue de dessus schématique d'un moyen de contrôle d'un dispositif de contrôle conforme à l'invention.

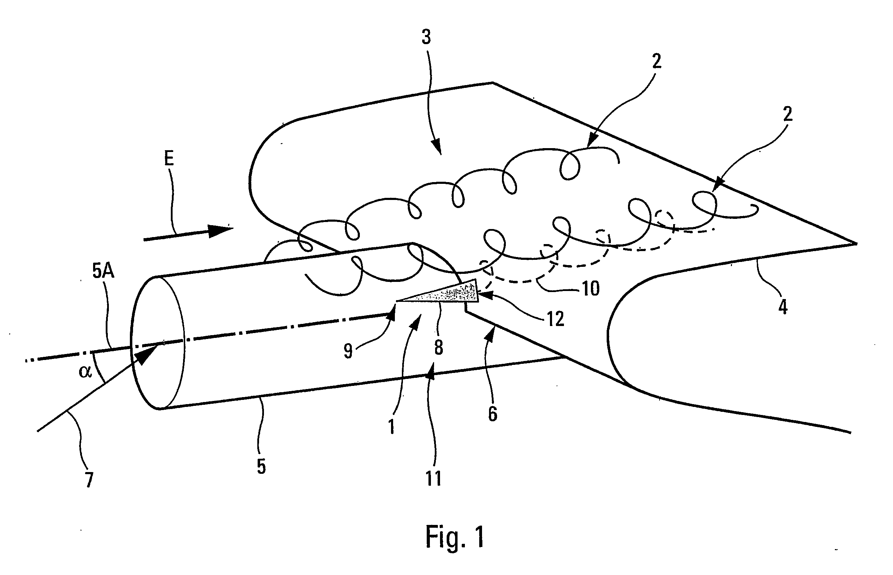

Le dispositif 1 conforme à l'invention et représenté schématiquement sur la figure 1 est destiné à contrôler un sillage tourbillonnaire 2 existant sur l'extrados 3 d'une surface portante 4 d'un aéronef (non représenté), en particulier sur l'extrados d'une aile d'avion. Ce sillage tourbillonnaire 2 est engendré de façon usuelle (à forte incidence essentiellement) par un élément oblong 5 qui est monté sous cette surface portante 4, en dépassant en amont (dans le sens E de l'écoulement fluide local) au moins-partiellement le bord-d'attaque 6 de ladite surface portante 4. Ledit élément oblong 5 peut être notamment un réacteur, un bidon de ravitaillement en vol ou une charge telle qu'un missile par exemple.

Plus précisément, le dispositif 1 conforme à l'invention a pour but de contrôler le sillage tourbillonnaire 2 pour une position de l'aéronef qui est proche du décrochage, c'est-à-dire pour un angle d'incidence locale α (qui est défini entre l'axe longitudinal 5A de l'élément oblong 5 et le vecteur vitesse air 7) qui est fort, par exemple supérieur à 12°, afin d'améliorer la portance maximale que la surface portante 4 peut engendrer en présence d'un tel élément oblong 5.

Pour ce faire, ledit dispositif de contrôle 1 est du type comportant au moins un moyen de contrôle 8 qui est fixé au niveau dudit élément oblong 5 et qui présente une forme allongée, dont l'axe longitudinal 8A est sensiblement parallèle à l'écoulement fluide local (flèche E) et dont l'extrémité amont 9 est pointue. Ce moyen de contrôle 8 est susceptible de créer un tourbillon auxiliaire 10 précisé ci-dessous.

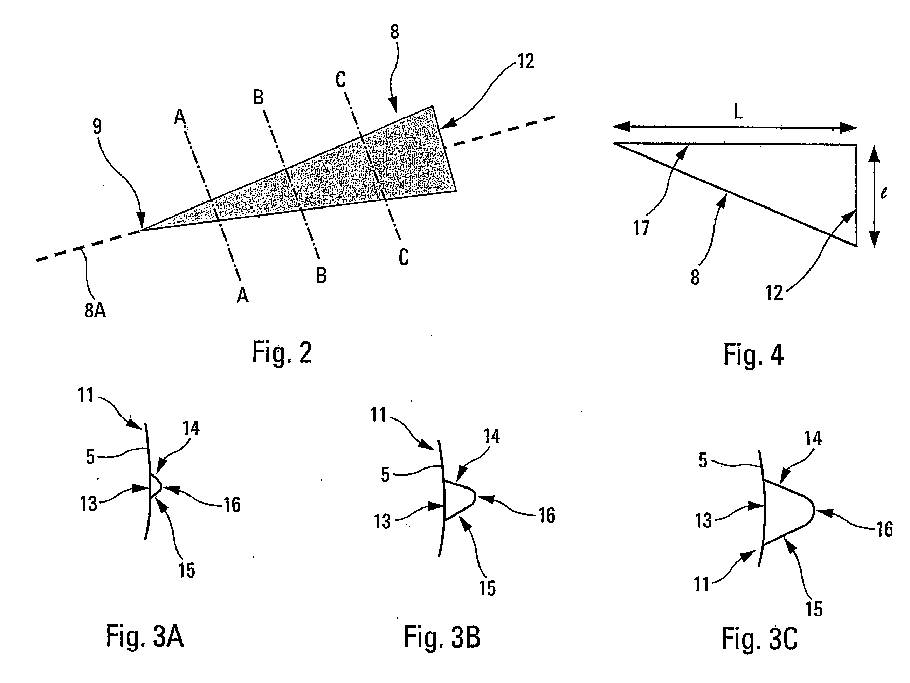

Selon l'invention, ledit moyen de contrôle 8 également représenté sur la figure 2 :

- est réalisé entièrement sous forme d'une pointe (ou dard) qui est triangulaire à la fois en vue latérale et en vue de dessus ;
- est agencé à la fois sur un élément de fixation 11 (précisé ci-dessous) de l'élément oblong 5 et sur la surface portante 4 de sorte que la base 12 de ladite pointe (correspondant à l'extrémité aval de cette dernière dans le sens E de l'écoulement fluide local) est amenée au contact du bord d'attaque 6 de ladite surface portante 4 ; et

- présente une forme qui est sensiblement triangulaire dans un plan perpendiculaire audit axe longitudinal 8A et qui présente un premier côté 13 destiné à venir au contact dudit élément de fixation 11 et deux côtés adjacents formant des flancs 14 et 15. Ces flancs 14 et 15 sont reliés ensemble par un bord arrondi 16 et forment un angle important, supérieur de préférence à 270°. Ceci est représenté sur les figures 3A, 3B et 3C qui correspondent à des coupes transversales dudit moyen de contrôle 8 perpendiculairement à son axe longitudinal 8A, respectivement suivant des lignes de coupe A-A, B-B et C-C telles que représentées sur la figure 2, qui sont prévues le long dudit axe longitudinal 8A.

De plus, la taille croissante des formes triangulaires de la figure 3A à la figure 3C illustre bien que le moyen de contrôle 8 est réalisé entièrement sous forme d'une pointe.

Ainsi, grâce à l'invention :

- comme la base 12 du moyen de contrôle 8 est amenée au contact du bord d'attaque 6 de la surface portante 4, le tourbillon auxiliaire 10 engendré par le moyen de contrôle 8 passe naturellement directement sur l'extrados 3 de la surface portante 4, là où se trouve le sillage tourbillonnaire 2 à contrôler ;
- comme ledit- moyen de contrôle 8 présente une forme- triangulaire comprenant deux flancs 14 et 15 adjacents, l'écoulement local au niveau de l'élément oblong 5 attaque le moyen de contrôle 8 par l'un de ces flancs à très fortes incidences locales positives, par exemple supérieures à 20°, ce qui engendre l'apparition d'un tourbillon auxiliaire 10 à coeur visqueux (à basse vitesse) sur le dessus du moyen de contrôle 8, en raison de la courbure très prononcée dudit moyen de contrôle 8 selon une direction perpendiculaire à son axe longitudinal 8A. Ce tourbillon auxiliaire 10 interagit de façon stabilisante avec le sillage tourbillonnaire 2, comme précisé ci-dessous ; et
- comme le moyen de contrôle 8 présente un bord arrondi 16 entre les deux flancs 14 et 15, ledit moyen de contrôle 8 peut être contourné par l'écoulement fluide local en vol en phase de croisière, c'est-à-dire pour des incidences locales au niveau du moyen de contrôle 8 qui sont réduites et sont comprises par exemple entre -5° et +5°, ce qui évite tout décollement dans ces situations de vol.

Par conséquent, le moyen de contrôle 8 du dispositif de contrôle 1 conforme à l'invention engendre un tourbillon auxiliaire 10 d'origine visqueuse, lorsqu'il est placé sous forte incidence par rapport à son axe principal 8A, c'est-à-dire lorsque la voilure de l'aéronef est proche du décrochage. Dans le cadre de la présente invention, on entend par tourbillon visqueux un tourbillon s'enroulant depuis un point singulier de frottement pariétal nul à la paroi, d'axe initial perpendiculaire à la paroi. Ce tourbillon auxiliaire visqueux 10 vient renforcer et stabiliser en envergure le sillage tourbillonnaire 2 émis par l'élément oblong 5. Cette stabilisation permet de maintenir l'ensemble tourbillonnaire proche de la surface portante 4 et parallèlement à l'axe 5A de l'élément oblong 5. En revanche, ce tourbillon auxiliaire 10 n'est pas engendré, lorsque le moyen de contrôle 8 est placé à des incidences faibles, c'est-à-dire à des incidences qui correspondent à l'attitude d'un avion conventionnel lors d'un vol en phase de croisière. Dans ce cas, l'axe longitudinal 8A du moyen de contrôle 8 est aligné avec l'écoulement du vent.

On notera que ledit élément de fixation 11 peut correspondre :

- soit audit élément oblong 5 (une nacelle de turbopropulseur ou un bidon de ravitaillement en vol par exemple), lorsque ce dernier est fixé directement sous la surface portante 4, comme représenté sur l'exemple des figures 1, 3A, 3B et 3C ;
- soit à un support (un mât de réacteur ou un support d'emport de charge par exemple) permettant de fixer ledit élément oblong (un réacteur ou une charge par exemple) sous ladite surface portante.

Dans un mode de réalisation particulier, ledit moyen de contrôle 8 présente en vue de dessus une forme triangulaire, dont d'une part la longueur L du côté 17 en regard (en vue de dessus) de l'élément de fixation 11 et d'autre part la longueur ℓ du côté 12 en contact avec la surface portante 4 vérifient la relation suivante :

$$L \geq \ell \geq L/10.$$

En outre, dans un mode de réalisation préféré non représenté, ledit dispositif de contrôle 1 comporte deux moyens de contrôle 8 qui sont agencés de part et d'autre de l'élément oblong 5 de manière à pouvoir contrôler les deux sillages 2 tourbillonnaires engendrés sur l'extrados 3 de la surface portante 4 de part et d'autre dudit élément oblong 5, comme illustré sur la figure 1.

**Revendications**

1. Dispositif de contrôle sur l'extrados (3) d'une surface portante (4) d'un aéronef d'au moins un sillage tourbillonnaire (2) engendré par au moins un élément oblong (5) qui est monté sous cette surface portante (4) en dépassant en amont partiellement le bord d'attaque (6) de ladite surface portante (4), ledit dispositif (1) comportant au moins un moyen de contrôle (8) :

- qui est apte à être agencé au niveau dudit élément oblong (5) ; et
- qui présente une forme allongée, dont l'axe longitudinal (8A) est sensiblement parallèle à un écoulement fluide local (E) et dont l'extrémité amont (9) est pointue,

**caractérisé en ce que** ledit moyen de contrôle (8) :

- est réalisé sous forme d'une pointe qui est triangulaire à la fois en vue latérale et en vue de dessus ;
- est apte a être agencé à la fois sur un élément de fixation (11) de l'élément oblong (5) et sur la surface portante (4) de sorte que la base (12) de ladite pointe correspondant à son extrémité aval est amenée au contact du bord d'attaque (6) de ladite surface portante (4) ; et
- présente une forme qui est sensiblement triangulaire dans un plan perpendiculaire audit axe longitudinal (8A) et qui présente un premier côté (13) destiné à venir au contact dudit élément de fixation (11) et deux côtés adjacents (14, 15) formant des flancs, lesdits flancs (14, 15) étant reliés ensemble par un bord arrondi (16).

2. Dispositif selon la revendication 1,
**caractérisé en ce que** ledit moyen de contrôle (8) présente en vue de dessus une forme triangulaire, dont d'une part la longueur L du côté (17) en regard de l'élément de fixation (11) et d'autre part la longueur $\ell$ du côté (12) en contact avec la surface portante (4) vérifient la relation suivante :

$$L \geq \ell \geq L/10.$$

3. Dispositif selon l'une des revendications 1 et 2,
**caractérisé en ce qu'**il comporte deux moyens de contrôle (8) qui sont apte à être agencés de part et d'autre de l'élément de fixation (11).

4. Dispositif selon l'une des revendications 1 à 3,
**caractérisé en ce que** ledit élément de fixation (11) correspond audit élément oblong (5) qui est fixé directement sous ladite surface portante (4).

5. Dispositif selon l'une des revendications 1 à 3,
**caractérisé en ce que** ledit élément de fixation correspond à un support permettant de fixer ledit élément oblong sous ladite surface portante.

6. Aéronef muni d'au moins une surface portante,
**caractérisé en ce qu'**il comporte un dispositif de contrôle (1) tel que celui spécifié sous l'une quelconque des revendications 1 à 5.

## Claims

1. A control device on the suction-face side (3) of a lift-generating surface (4) of an aircraft for controlling at least one vortex trail (2) generated by at least one oblong element (5) which is mounted under this lift-generating surface (4) protruding partially beyond the leading edge (6) of said lift-generating surface (4) in the upstream direction, said device (1) comprising at least one control means (8):

- which is able to be arranged at the level of said oblong element (5); and
- which has an elongate shape, its longitudinal axis (8A) being substantially parallel to a local fluid flow (E) and its upstream end (9) being pointed,

**characterized in that** said control means (8):

- is produced in the form of a point which is triangular both when viewed from the side and when viewed from the top;
- is able to be arranged both on a fixing element (11) used to secure the oblong element (5) and on the lift-generating surface (4) in such a way that the base (12) of said point, which corresponds to its downstream end is brought into contact with the leading edge (6) of said lift-generating surface (4); and
- has a shape which is substantially triangular in a plane perpendicular to said longitudinal axis (8A) and which has a first side (13) intended to come into contact with said fixing element (11) and two adjacent sides (14, 15) forming flanks, said flanks (14, 15) being joined together by a rounded edge (16).

2. The device as claimed in claim 1,
**characterized in that** said control means (8) has, when viewed from above, a triangular shape in which, on the one hand, the length L of the side (17) facing the fixing element (11) and, on the other hand, the length $\ell$ of the side (12) in contact with the lift-generating surface (4) satisfy the following relationship:

$$L \geq \ell \geq L/10.$$

3. The device as claimed in one of claims 1 and 2,
**characterized in that** it comprises two control means (8) which are able to be positioned one on each side of the fixing element (11).

4. The device as claimed in one of claims 1 to 3, **characterized in that** said fixing element (11) corresponds to said oblong element (5) which is fixed directly under said lift-generating surface (4).

5. The device as claimed in one of claims 1 to 3, **characterized in that** said fixing element corresponds to a support allowing said oblong element to be fixed under said lift-generating surface.

6. An aircraft equipped with at least one lift-generating surface, **characterized in that** it comprises a control device (1) like the one specified in any one of claims 1 to 5.

**Patentansprüche**

1. Vorrichtung auf der Saugseite (3) einer Tragfläche (4) eines Luftfahrzeugs zum Steuern mindestens eines Wirbelstroms (2), der von mindestens einem länglichen Element (5) erzeugt wird, das unter dieser Tragfläche (4) montiert ist, wobei es stromauf die Vorderkante (6) der Tragfläche (4) teilweise überragt, wobei die Vorrichtung (1) mindestens ein Steuermittel (8) umfasst:

   - das dazu geeignet ist, an dem länglichen Element (5) angeordnet zu werden; und
   - das eine längliche Form aufweist, deren Längsachse (8A) zu einem lokalen Fluidfluss (E) im Wesentlichen parallel ist und deren vorgelagertes Ende (9) spitz ist,

   **dadurch gekennzeichnet, dass** das Steuermittel (8):

   - als eine Spitze ausgebildet ist, die sowohl seitlich als auch von oben gesehen dreieckig ist;
   - dazu geeignet ist, sowohl auf einem Befestigungselement (11) des länglichen Elements (5) als auch auf der Tragfläche (4) angeordnet zu werden, so dass die Basis (12) der Spitze, die ihrem nachgelagerten Ende entspricht, in Kontakt mit der Vorderkante (6) der Tragfläche (4) gebracht wird; und
   - eine Form aufweist, die in einer Ebene, die zu der Längsachse (8A) rechtwinklig ist, im Wesentlichen dreieckig ist und eine erste Seite (13), die dazu gedacht ist, mit dem Befestigungselement (11) in Kontakt zu kommen, und zwei nebeneinanderliegende Seiten (14, 15), die Flanken bilden, aufweist, wobei die Flanken (14, 15) durch eine abgerundete Kante (16) miteinander verbunden sind.

2. Vorrichtung nach Anspruch 1, **dadurch gekennzeichnet, dass** das Steuermittel (8) von oben gesehen eine dreieckige Form aufweist, deren Länge L der Seite (17) gegenüber dem Befestigungselement (11) einerseits und deren Länge ℓ der Seite (12) in Kontakt mit der Tragfläche (4) andererseits folgende Beziehung erfüllen:

$$L \geq \ell \geq L/10.$$

3. Vorrichtung nach einem der Ansprüche 1 und 2, **dadurch gekennzeichnet, dass** sie zwei Steuermittel (8) umfasst, die dazu geeignet sind, auf beiden Seiten des Befestigungselements (11) angeordnet zu werden.

4. Vorrichtung nach einem der Ansprüche 1 bis 3, **dadurch gekennzeichnet, dass** das Befestigungselement (11) dem länglichen Element (5) entspricht, das direkt unter der Tragfläche (4) befestigt ist.

5. Vorrichtung nach einem der Ansprüche 1 bis 3, **dadurch gekennzeichnet, dass** das Befestigungselement einem Träger entspricht, der es ermöglicht, das längliche Element unter der Tragfläche zu befestigen.

6. Luftfahrzeug, das mit mindestens einer Tragfläche ausgestattet ist, **dadurch gekennzeichnet, dass** es eine Steuervorrichtung (1) umfasst, wie sie in einem der Ansprüche 1 bis 5 angegeben wird.

Fig. 1

EP 1 937 553 B1

Fig. 2

Fig. 4

Fig. 3A

Fig. 3B

Fig. 3C

EP 1 937 553 B1

**RÉFÉRENCES CITÉES DANS LA DESCRIPTION**

**Documents brevets cités dans la description**

- US 3744745 A
- US 4685643 A